# EUROPÄISCHE PATENTANMELDUNG

(11) **EP 1 327 824 A1**
(43) Veröffentlichungstag der Anmeldung: **16.07.2003**
(21) Anmeldenummer: 01811274.8
(22) Anmeldetag: 24.12.2001
(51) Int. Cl.: F23N 5/00, F02C 9/28

(54) **Bestimmung und Regelung des Betriebszustandes einer Gasturbinenbrennkammer bei Annäherung an die Löschgrenze**

(71) Anmelder: ABB Schweiz AG, 5400 Baden (CH)
(72) Erfinder: Weisenstein, Wolfgang, 5453 Remetschwil (CH); Ganz, Christopher, 8046 Zürich (CH)
(74) Vertreter: ABB Patent Attorneys

(57) **Zusammenfassung**

In einer Vorrichtung und einem Verfahren zur Detektierung einer Löschgrenze im Betrieb einer Gasturbine wird mit einem Pulsationsaufnehmer (12) ein Druck in einer Brennkammer der Gasturbine erfasst und ein entsprechendes Drucksignal gebildet, und wird zumindest ein erster relativer Signalanteil des Drucksignals in einem ersten Frequenzbereich (b1) des Drucksignals und ein zweiter relativer Signalanteil des Drucksignals in einem zweiten Frequenzbereich (b3;b4;b5) bestimmt, und wird ein Ausgangssignal (7), welches eine Nähe zur Löschgrenze repräsentiert, nach Massgabe des ersten und zweiten relativen Signalanteils bestimmt.

## Beschreibung

### Technisches Gebiet

Die Erfindung betrifft das Gebiet der Messung und Regelung von Prozessgrössen im Betrieb einer Gasturbine. Sie bezieht sich insbesondere auf eine Vorrichtung und ein Verfahren zur Detektierung einer Löschgrenze im Betrieb einer Gasturbine gemäss dem Oberbegriff der Patentansprüche 1 und 6.

### Stand der Technik

Die Verbrennung moderner industrieller Gasturbinen wird, ausser in der Startphase und im Leerlaufbetrieb, fast ausschliesslich im Vormischbetrieb gefahren. Damit wird ein Ausstoss an Luftschadstoffen, insbesondere von Stickoxiden (NOx), minimiert. Im Vormischbetrieb werden Brennstoff und Luft vor der eigentlichen Verbrennung intensiv miteinander vermischt und erst dann gezündet. Dies hat den Vorteil, dass die Verbrennung mit relativ niedriger Flammentemperatur abläuft, bei der, unter Zugrundelegen des Zeldovich- und des Fenimore-Mechanismus, wenig Stickoxide entstehen. Der günstigste Betriebspunkt liegt dabei hinsichtlich der Schadstoffproduktion ebenso wie der Brennstoffausnutzung sehr nahe einer sogenannten mageren Löschgrenze. Bei deren Unterschreiten wird von der Flamme nicht mehr genügend Wärmeenergie freigesetzt um das anströmende Frischgemisch auf die Zündtemperatur zu erwärmen. Unterschreitet die Flammentemperatur in einer Gasturbinen-Brennkammer diese Grenze, so wird die Verbrennung zunächst instabil und verlischt schliesslich schlagartig, da mit fallendem Energieumsatz ein immer grösserer Teil der freigesetzten Wärme an die Brennkammerwände verloren geht. Es ist daher wünschenswert, zu bestimmen, ob sich ein Betriebszustand der Gasturbine der Löschgrenze nähert, um Gegenmassnahmen treffen zu können, bevor die Flamme verlöscht. Bestehende Verfahren detektieren das Verlöschen der Flamme mit optischen Mitteln. Andere bestehende Verfahren messen eine Abgaszusammensetzung am Austritt der Gasturbine, welche einen Rückschluss auf die Art Verbrennung und auf eine Nähe zur Löschgrenze ermöglicht. Die Messwerte liegen jedoch aufgrund der Laufzeit der Abgase durch die Turbine und gegebenenfalls einen Dampferzeuger sowie aufgrund einer Trägheit der Gasanalyse erst nach verhältnismässig langer Zeit vor. Damit ist also keine genaue und schnelle Bestimmung der Nähe zur Löschgrenze möglich.

### Darstellung der Erfindung

Es ist deshalb Aufgabe der Erfindung, ein Verfahren und eine Vorrichtung zur Detektierung einer Löschgrenze im Betrieb einer Gasturbine der eingangs genannten Art zu schaffen, welche die oben genannten Nachteile behebt.

Diese Aufgabe lösen ein Verfahren und eine Vorrichtung zur Detektierung einer Löschgrenze im Betrieb einer Gasturbine mit den Merkmalen der Patentansprüche 1 und 6.

Im erfindungsgemässen Verfahren wird mit einem Pulsationsaufnehmer ein Druck in einer Brennkammer der Gasturbine erfasst und ein entsprechendes Drucksignal gebildet, und wird zumindest ein erster relativer Signalanteil des Drucksignals in einem ersten Frequenzbereich des Drucksignals und ein zweiter relativer Signalanteil des Drucksignals in einem zweiten Frequenzbereich bestimmt, und wird ein Ausgangssignal, welches eine Nähe zur Löschgrenze repräsentiert, nach Massgabe des ersten und zweiten relativen Signalanteils bestimmt.

Damit ist es möglich, mit einfachen und robusten Sensoren eine unmittelbare Beurteilung einer Nähe zur Löschgrenze zu bestimmen.

In einer bevorzugten Variante der Erfindung wird das Ausgangssignal durch Division der relativen Signalanteile und durch Vergleich mit einem gegebenen Schwellwert bestimmt.

In einer weiteren bevorzugten Ausführungsform der Erfindung wird das Ausgangssignal anhand von drei oder mehr relativen Signalanteilen des Drucksignals bestimmt, vorzugsweise durch ein neuronales Netzwerk.

In einer weiteren bevorzugten Ausführungsform der Erfindung wird die Gasturbine nach Massgabe des Ausgangssignals geregelt, um zu verhindern, dass sich der Verbrennungsprozess der Löschgrenze zu sehr nähert.

Die erfindungsgemässe Vorrichtung zur Detektierung einer Löschgrenze im Betrieb einer Gasturbine weist auf: einen Pulsationsaufnehmer zur Erfassung eines Drucks in einer Brennkammer einer Gasturbine und zur Bildung eines Drucksignals, mindestens zwei Mittel zur Bestimmung von jeweils einem relativen Signalanteil des Drucksignals in unterschiedlichen Frequenzbereichen, und Mittel zur Bestimmung eines Ausgangssignals, welches eine Nähe zur Löschgrenze repräsentiert, nach Massgabe der mindestens zwei relativen Signalanteile des Drucksignals.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: ein Signalflussbild gemäss einer ersten Ausführungsform der Erfindung;
- Figur 2: ein Signalflussbild gemäss einer zweiten Ausführungsform der Erfindung;
- Figuren 3-5: typische Frequenzspektren von akustischen Schwingungen bei einer Vormischverbrennung; und
- Figuren 6-8: Wirkungsweise von Tief- und Hochpassfiltern der ersten Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

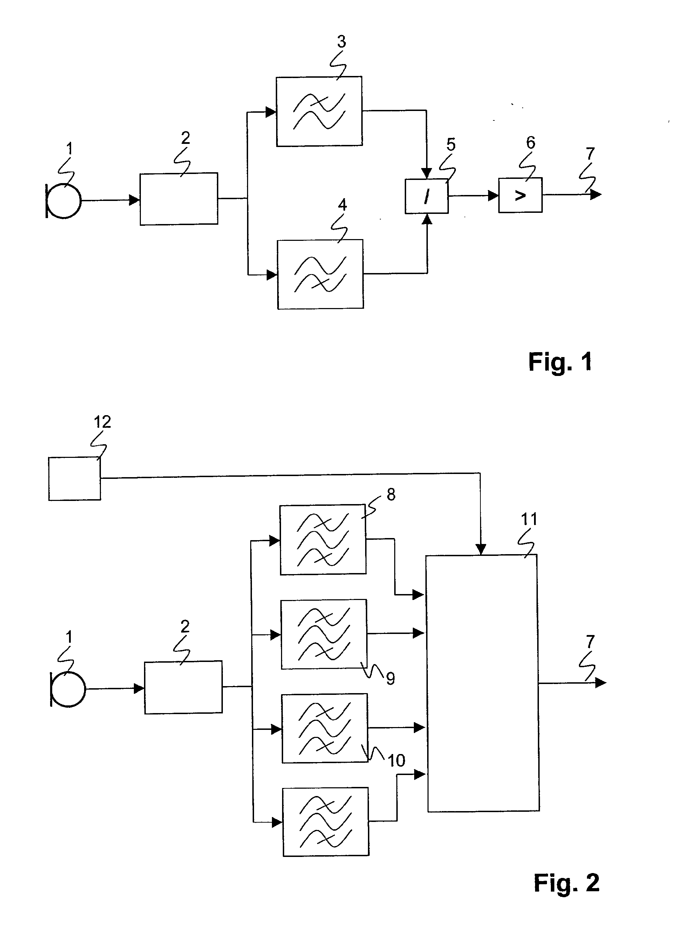

Figur 1 zeigt ein Signalflussbild gemäss einer ersten Ausführungsform der Erfindung. Ein Pulsationsaufnehmer 1 misst einen Druck in einer Gasturbinenbrennkammer und erfasst auch Druckschwankungen in einem akustischen Bereich, d.h. beispielsweise zwischen 10 Hz und 5 kHz. Solche Pulsationsaufnehmer 1 sind oft bereits in Gasturbinen installiert, beispielsweise als Druckmesser oder um Brennkammerschwingungen zu erfassen. Ein Signal- oder Messverstärker 2 dient zur Bildung eines Drucksignals, welches den Brennkammerdruck repräsentiert. Das Drucksignal ist Eingangssignal eines Tiefpassfilters 3 wie auch eines Hochpassfilters 4. Diese beiden Filter 3,4 sind jeweils zur Bestimmung einer Kenngrösse des jeweils gefilterten Signals ausgebildet. Diese Kenngrösse ist beispielsweise eine maximale Amplitude, oder eine Signalenergie oder ein Integral der Signalamplitude oder Signalenergie über der Signalfrequenz. Die jeweilige Kenngrösse am Ausgang des Tiefpassfilters 3 respektive Hochpassfilters 4 repräsentiert einen relativen Signalanteil des Drucksignals im Bereich der Durchlassfrequenzen des Tiefrespektive Hochpasses. Ein Mittel zur Division 5 ist zur Bildung eines Quotienten der beiden relativen Signalanteile ausgebildet. Der Quotient ist Eingangswert eines Komparators 6, in welchem der Quotient mit einem vorgegebenen Schwellwert verglichen wird und eine entsprechende binäre Grösse als Ausgangssignal 7 gebildet wird. In einer anderen bevorzugten Ausführungsform der Erfindung ist das Ausgangssignal 7 eine kontinuierliche Grösse und gleich dem in der Division 5 gebildeten Quotienten.

Figur 2 zeigt ein Signalflussbild gemäss einer zweiten Ausführungsform der Erfindung. Hier wird das Drucksignal aus dem Messverstärker 2 mehreren Bandpassfiltern 8,9,10 zugeführt. Diese Bandpassfilter 8,9,10 sind jeweils zur Bestimmung einer Kenngrösse des jeweils gefilterten Signals ausgebildet, welche jeweils einen relativen Signalanteil des Drucksignals im Bereich der Durchlassfrequenzen des jeweiligen Filters 8,9,10 repräsentieren. Diese relativen Signalanteile werden einem neuronalen Netzwerk 11 als Eingänge zugeführt, welches daraus einen Wert für das Ausgangssignal 7 ermittelt. Ein Gerät zur Gasanalyse 12 ist zur Messung von beispielsweise einen CO-Gehalt und einen Gehalt an unverbrannten Kohlenwasserstoffen im Abgas der Gasturbine ausgebildet, sowie zur Bestimmung einer Nähe des Verbrennungsprozesses von der mageren Löschgrenze. Die Gasanalyse 12 wird zum Trainieren des neuronalen Netzwerks 11 verwendet.

Die Wirkungsweise der Erfindung basiert auf der Erkenntnis, dass kurz vor dem Löschen Verbrennungsinstabilitäten auftreten, welche ein charakteristisches Muster von Druckpulsationen erzeugen: Generell gesehen haben Druckschwingungen in Gasturbinen-Brennkammern zwei Ursachen. Zum einen treten verbrennungsgetriebenen Instabilitäten auf, die aus einem Zusammenspiel von schwankender Wärmefreisetzung und Druckschwankungen aufgrund von akustischer Resonanz innerhalb der Brennkammer beruhen. Diese Schwingungen können grundsätzlich an jedem Betriebspunkt auftreten und hängen nur begrenzt mit einer Annäherung an die Löschgrenze zusammen. Zum anderen treten Druckschwingungen in einer Gasturbinen-Brennkammer aufgrund von Turbulenzen auf, die sich wiederum in aerodynamische und thermodynamische Turbulenzen unterteilen lassen. Aerodynamische Turbulenz entsteht jedesmal, wenn eine Strömung mit hoher Geschwindigkeit über eine Kante strömt und sich hinter der Kante eine Rückströmzone bildet. Die dort entstehenden Wirbel werden mit der Strömung stromabwärts getragen und können als Druckschwankungen gemessen werden.

Thermodynamische Turbulenz entsteht durch die Volumenänderung der Verbrennungsabgase gegenüber dem unverbrannten Luft/Brennstoffgemisch, auch Frischgas genannt. Aufgrund der durch die Verbrennungsreaktion hervorgerufenen Temperaturerhöhung der Gase in der Reaktionszone muss sich das Volumen des Abgases gegenüber dem Frischgas vergrössern, da prinzipbedingt eine Druckererhöhung nicht möglich ist. Das vergrösserte Volumen der Verbrennungsgase muss sich einen Weg durch die Brennkammer suchen und verdrängt dabei partiell das anströmende Frischgas. Da kaltes Frischgas und heisse Verbrennungsgase stark unterschiedliche Temperaturen und somit auch unterschiedliche Zähigkeiten haben, können sich diese nicht direkt homogen mischen, sondern müssen zunächst ihre Temperatur einander angleichen. Dieser Wärmetransport vom heissen Abgas zum kalten Frischgas ist einer der wichtigsten Mechanismen, die für die Fortpflanzung der Flammenreaktion sorgen.

Da sich Abgas und Frischgas nicht sofort mischen können, entstehen hier schwach harmonische Wirbelstrukturen, die als Drucksignale thermodynamischer Turbulenzen gemessen werden können. Abhängig von Brenner, Brennkammergeometrie und Betriebspunkt der Maschine liegen die Frequenzen dieser Druckschwingungen im Volllastbetrieb beispielsweise zwischen 100 und 300 Hz und sinken bei Annäherung an die Löschgrenze: Ein Energiemaximum der Druckschwingungen verschiebt sich bei einer Annäherung an die thermische Löschgrenze hin zu den tieferen Frequenzbändern. Beim Erreichen der Löschgrenze befindet sich das Energiemaximum in den meisten Fällen im Bereich um 10 Hz.

Dieses Absinken hängt einerseits mit der geringeren Temperaturerhöhung und der damit verbundenen geringeren Volumenänderung zusammen. Andererseits zeigt sich hier auch der Einfluss der ähnlicheren Zähigkeiten der beiden Gasgemische. Da die Durchmischung immer geringer wird, nehmen auch die thermodynamischen Turbulenzen immer weiter ab, wodurch sich der Wärmetransport vom Abgas ins Frischgas weiter verringert. Da die Kühlung der Brennkammerwände konstruktionsbedingt weiterhin sehr intensiv ist, geht zusätzlich anteilmässig mehr Wärme an die Wände verloren als im Auslegungs-Betriebspunkt. Diese ineinandergreifenden Effekte führen dazu, dass ab einem bestimmten Punkt die Flamme nicht mehr in der Lage ist, sich selbstständig zu stabilisieren. Zu diesem Zeitpunkt setzen dann massive Löschpulsationen mit hoher Druckamplitude ein, die durch ein periodisches Löschen und Wiederzünden der Flamme entstehen. Aufgrund der hohen Druckamplituden muss ein länger anhaltender Betrieb in diesem Bereich unbedingt vermieden werden, da es sonst zu mechanischen Schäden an der Brennkammer und der Turbine kommen kann. Da die Wärmefreisetzung dieser pulsierenden Flamme eher gering ist, wird meist sehr schnell ein Zustand erreicht, an dem die Flamme endgültig verlischt.

Das erfindungsgemässe Prinzip der Löschgrenzenbestimmung durch Auswertung der thermodynamischen Turbulenzfrequenzen beruht auf der Veränderung dieser Frequenzen respektive der entsprechenden Energieanteile hin zu niedrigeren Frequenzbereichen, je mehr sich der Verbrennungsprozess der Löschgrenze nähert. Dabei wird nicht zwingend eine absolute Amplitude einer bestimmten Frequenz ausgewertet, sondern wird der gesamte Frequenzbereich betrachtet, den die thermodynamischen Turbulenzen einnehmen können.

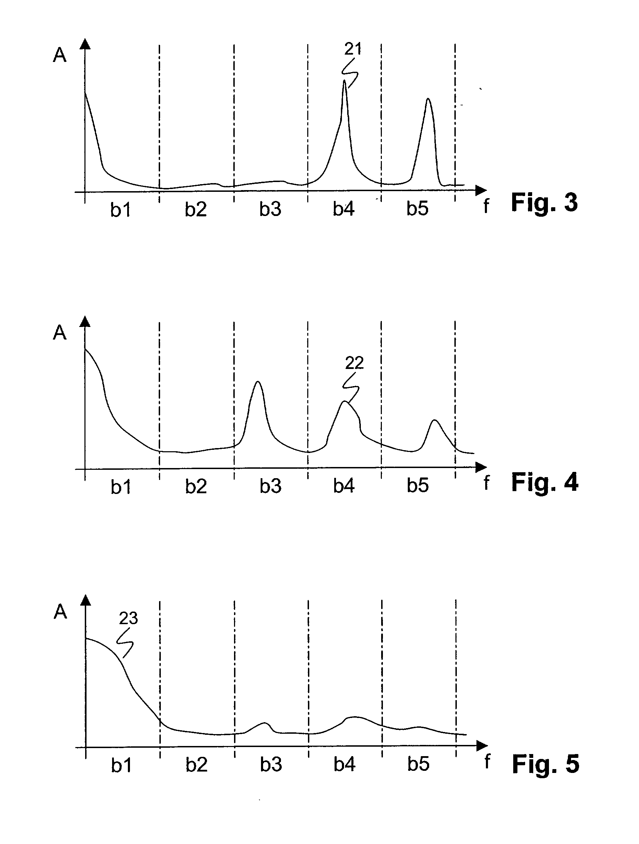

Figuren 3-5 zeigen typische Frequenzspektren von akustischen Schwingungen bei einer Vormischverbrennung. Es ist jeweils eine Amplitude A über einer Frequenz f aufgetragen. Die Frequenzen sind in verschiedene Frequenzbänder b1,b2, ... b5 aufgeteilt. Diese sind in den Figuren zwar äquidistant gezeichnet, müssen dies jedoch nicht zwingend sein. In Figur 3 ist ein typisches Frequenzspektrum 21 einer Vormischverbrennung im Auslegungs-Betriebspunkt gezeigt, und in Figur 4 ein typisches Frequenzspektrum 22 einer Vormischverbrennung mit Pilotstabilisierung. Wie leicht erkennbar ist liegt in diesen beiden Betriebsarten das Energiemaximum bei stabiler Verbrennung nicht in einem niedrigen Frequenzband. In Figur 5 ist ein typisches Frequenzspektrum 23 einer Vormischverbrennung nahe der mageren Löschgrenze gezeigt. Die Verschiebung der Energimaximums zu tiefen Frequenzen im untersten Frequenzband ist klar erkennbar. Im Allgemeinen weisen die Frequenzspektren jeweils Frequenzbereiche auf, in welchen keine wesentlichen Schwingungen auftreten. Beispielhafte Werte sind 110 bis 130 Hz für das Signalmaximum im vierten Frequenzband b4, 270 Hz für das Signalmaximum im fünften Frequenzband b5. Ein unterster Frequenzbereich, in welchen die Frequenzspektren ein Minimum aufweisen, in dem also keine wesentlichen Schwingungen auftreten liegt im vorliegenden Beispiel im zweiten Frequenzband b2 bei ca. 50 Hz.

Bei Annäherung an die Löschgrenze weist aufgrund der zurückgehenden Turbulenz das niedrigste Frequenzband einen immer höheren Signalanteil auf. Der Signalanteil in einem Frequenzband wird vorzugsweise als integraler Energiegehalt des Signals in dem Frequenzband definiert, oder als Integral der Amplitude über der Frequenz. Im Vergleich zwischen den Frequenzbändern lässt sich kritisches Verhältnis zwischen dem Signalanteil in höheren und tieferen Frequenzbändern bestimmen, das für einen sicheren Betrieb im Hinblick auf die Löschgrenze nicht unterschritten werden darf. Der relative Signalanteil bei tieferen Frequenzen gegenüber dem relativen Signalanteil bei höheren Frequenzen ist also repräsentativ für eine Nähe des Verbrennungsprozesses zur Löschgrenze.

Ein genauer Wert für das kritische Verhältnis ist aufgrund von Fertigungstoleranzen von Maschine zu Maschine verschieden und ist für jede Maschine einzeln zu optimieren. Dazu wird bei einer Inbetriebnahme der Gasturbine eine Qualität der Verbrennung anhand von der nach üblichen Gesetzesvorschriften ohnehin obligatorisch durchgeführten Gasanalyse 12 der Verbrennungsgase bestimmt. Beispielsweise ist bekannt, dass bei einer adiabaten Flammentemperatur von 1680 K ein stark erhöhter CO-Anteil eine kritische Nähe an die Löschgrenze anzeigt.

Da die Gasanalyse 12 Totzeiten aufgrund der Gaslaufzeit bis zur Messstelle sowie aufgrund der Messverzögerung aufweist, liegen ihre Messwerte zu spät vor, um im Normalbetrieb der Gasturbine eine Annäherung an die Löschgrenze rechtzeitig zu detektieren, um Gegenmassnahmen einleiten zu können. Sie eignet sich jedoch sehr wohl, um bei der Inbetriebnahme das kritische Verhältnis der Signalanteile zu finden, bei welchem die Nähe zur Löschgrenze durch den Komparator 6 detektiert werden soll.

Da jede Gasturbine an ihrem jeweiligen Einsatzort individuellen Umgebungsbedingungen auch die Verbrennung in jeder Maschine anders abläuft, wird in einer bevorzugten Ausführungsform der Erfindung das kritische Verhältnis nach Massgabe des gemessenen Signalverhältnisses nach der Division 5 und der Werte der Gasanalyse bei der ersten Inbetriebnahme ermittelt. Werden im Laufe ihrer Lebensdauer signifikante technische Änderungen oder Reparaturen an der Gasturbine durchgeführt, so muss diese Prozedur wiederholt werden, da sich die thermischen und akustischen Verhältnisse in der Brennkammer geändert haben können. Ist die Maschine besonders rauhen Betriebsbedingungen unterworfen oder ist der Zeitraum zwischen zwei Revisionen sehr lang, dann ist eine Zwischenkalibration von Vorteil.

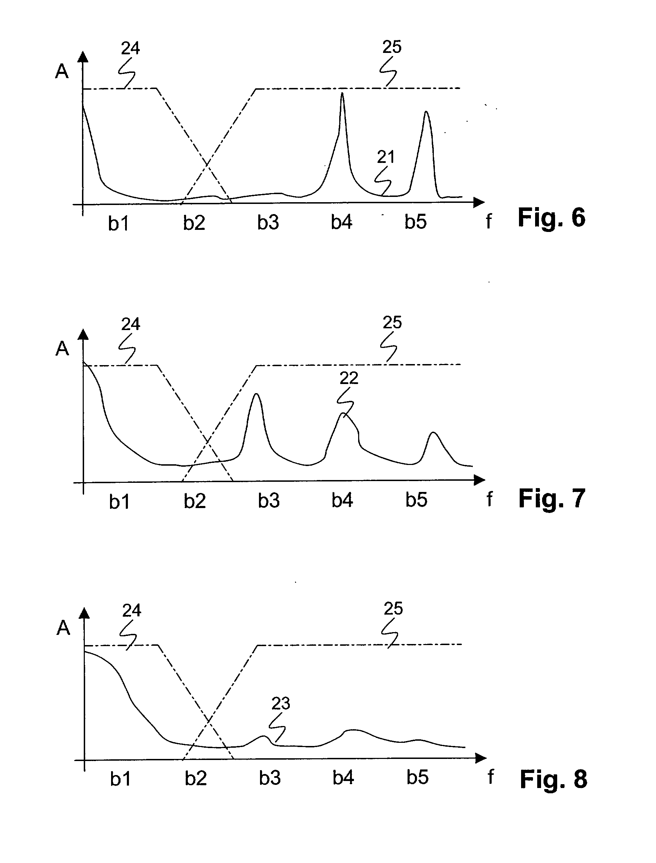

Figuren 6-8 zeigen eine Wirkungsweise von Tief- und Hochpassfiltern gemäss der ersten Ausführungsform der Erfindung von Figur 1. Figur 6 entspricht den Verbrennungsverhältnissen von Figur 3, Figur 7 jenen von Figur 4, und Figur 8 jenen von Figur 5. Eine Durchlasscharakteristik des Tiefpassfilters 3 ist mit 24 bezeichnet, eine Durchlasscharakteristik des Hochpassfilters 3 mit 25. Eine Grenzfrequenz der beiden Filter 3,4 wird in einen tiefsten Frequenzbereich gelegt, in welchem die Signale 21,22,23 ein Minimum aufweisen, wo also keine wesentlichen Schwingungen auftreten. Das Tiefpassfilter 3 erfasst also Schwingungen in einem untersten Frequenzband b1, das Hochpassfilter 4 erfasst Schwingungen in darüberliegenden Frequenzbändern b3,b4,b6. Das Verhältnis der beiden gefilterten Signale zueinander ist ein Mass für die Annäherung an die Löschgrenze. Da die Lage der entscheidenden Frequenzbänder maschinenabhängig ist, wird sie vorzugsweise sie aufgrund von Messungen bestimmt und werden die Filter entsprechend parametriert.

In eine bevorzugten Ausführungsform der Erfindung wird als Ausgangssignal 7 nicht ein binäres Signal gebildet, sondern ist das Verhältnis der Signalanteile selber gleich dem Ausgangssignal 7. Eine Verbrennungsregelung der Gasturbine passt eine Brennstoffmenge und/oder eine Luftmenge nach Massgabe des Ausgangssignals 7 an. Dabei wird zur Abwendung des unerwünschten Verlöschens der Flamme in den meisten Fällen die Brennstoffzufuhr erhöht. Nur bei Maschinen mit verstellbaren Einlassleitschaufeln bietet sich die Möglichkeit, die Luftzufuhr zur Brennkammer bei konstantem Brenstoffstrom zu verringern. Diese Möglichkeit wird jedoch im allgemeinen nicht genutzt, da sich dabei Strömungsgeschwindigkeiten ändern, was eine Abkehr vom günstigsten Betriebspunkt der Maschine bedeutet.

In der Ausführungsform der Erfindung gemäss Figur 2 ist das Ausgangssignal 7 ebenfalls ein kontinuierliches und wird durch das neuronale Netzwerk 11 aus den Anteilen des Drucksignals in unterschiedlichen Frequenzbereichen gebildet. Ein Training des neuronalen Netzwerks 11 erfolgt in bekannter Weise anhand von Messungen der Gasanalyse 12. Mit dieser Einrichtung ist es möglich, den Vorgang der Kalibration, d. h. die Bestimmung der kritischen Druckamplitudenverteilung, zu automatisieren.

In einer weiteren vorteilhaften Variante der Erfindung wird das neuronale Netzwerk 11 gleichzeitig mit der Vorrichtung der ersten Ausführungsform der Erfindung gemäss Figur 1 betrieben. Da die Einrichtung gemäss Figur 2 im Normalbetrieb ebenfalls Pulsations- und Emissionsdaten empfängt, werden damit alterungsbedingte Änderungen in der Lage der kritischen Amplitudenverteilung erfasst und ist der entsprechende Schwellwert des Kopmarators 6 automatisch nachführbar oder kann einem Benutzer angezeigt werden.

### Bezugszeichenliste

- 1: Pulsationsaufnehmer
- 2: Messverstärker
- 3: Tiefpassfilter
- 4: Hochpassfilter
- 5: Division
- 6: Komparator
- 7: Ausgangssignal
- 8: erster Bandpass
- 9: zweiter Bandpass
- 10: dritter Bandpass
- 11: neuronales Netzwerk
- 12: Gasanalyse
- 21: Typisches Frequenzspektrum einer Vormischverbrennung im Auslegungs-Betriebspunkt.
- 22: Typisches Frequenzspektrum einer Vormischverbrennung mit Pilotstabilisierung
- 23: Typisches Frequenzspektrum einer Vormischverbrennung nahe der mageren Löschgrenze.
- 24: Filtercharakteristik eines Tiefpassfilters
- 25: Filtercharakteristik eines Hochpassfilters
- A: Amplitude
- f: Frequenz
- b1, b2, ...b5: erstes, zweites, ... fünftes Frequenzband

## Patentansprüche

1. Verfahren zur Detektierung einer Löschgrenze im Betrieb einer Gasturbine **dadurch gekennzeichnet, dass**
mit einem Pulsationsaufnehmer (1) ein Druck in einer Brennkammer der Gasturbine erfasst wird und ein entsprechendes Drucksignal gebildet wird,
und zumindest ein erster relativer Signalanteil des Drucksignals in einem ersten Frequenzbereich des Drucksignals und ein zweiter relativer Signalanteil des Drucksignals in einem zweiten Frequenzbereich bestimmt werden, und
ein Ausgangssignal (7), welches eine Nähe zur Löschgrenze repräsentiert, nach Massgabe des ersten und zweiten relativen Signalanteils bestimmt wird.

2. Verfahren gemäss Anspruch 1, **dadurch gekennzeichnet, dass** das Ausgangssignal (7) durch Division (5) des ersten und des zweiten relativen Signalanteils bestimmt wird.

3. Verfahren gemäss einem der vorherigen Ansprüche, **dadurch gekennzeichnet, dass** mindestens ein dritter relativer Signalanteil des Drucksignals in einem dritten Frequenzbereich bestimmt wird, und das Ausgangssignal (7) durch ein neuronales Netzwerk (11) anhand der relativen Signalanteile des Drucksignals bestimmt wird.

4. Verfahren gemäss einem der vorherigen Ansprüche, **dadurch gekennzeichnet, dass** eine Brennstoffzufuhr der Gasturbine nach Massgabe des Ausgangssignals (7) geregelt wird.

5. Verfahren gemäss einem der vorherigen Ansprüche, **dadurch gekennzeichnet, dass** eine Luftzufuhr der Gasturbine nach Massgabe des Ausgangssignals (7) geregelt wird.

6. Vorrichtung zur Detektierung einer Löschgrenze im Betrieb einer Gasturbine
**dadurch gekennzeichnet, dass** die Vorrichtung aufweist
einen Pulsationsaufnehmer (1) zur Erfassung eines Drucks in einer Brennkammer einer Gasturbine und zur Bildung eines Drucksignals,
mindestens zwei Mittel (3,4;8,9,10) zur Bestimmung von jeweils einem relativen Signalanteil des Drucksignals in unterschiedlichen Frequenzbereichen, und
Mittel (5,6;11) zur Bestimmung eines Ausgangssignals (7), welches eine Nähe zur Löschgrenze repräsentiert, nach Massgabe der mindestens zwei relativen Signalanteile des Drucksignals.

7. Vorrichtung nach Anspruch 6, wobei die Mittel (5,6) zur Bestimmung des Ausgangssignals (7) ein Mittel zur Division (5) eines ersten und eines zweiten relativen Signalanteils und einen Komparator (6) zum Vergleich des Resultates dieser Division (5) mit einem vorgegebenen Schwellwert aufweist.

8. Vorrichtung nach Anspruch 6, wobei die Mittel (11) zur Bestimmung des Ausgangssignals (7) ein neuronales Netzwerk (11) zur Bildung des Ausgangssignals (7) aus den relativen Signalanteilen aufweisen.

9. Vorrichtung nach Anspruch 6,7 oder 8 wobei die Vorrichtung zur Regelung einer Brennstoffzufuhr der Gasturbine nach Massgabe des Ausgangssignals (7) ausgebildet ist.

10. Vorrichtung nach Anspruch 6,7 oder 8 wobei die Vorrichtung zur Regelung einer Luftzufuhr der Gasturbine nach Massgabe des Ausgangssignals (7) ausgebildet ist.
